# EUROPÄISCHE PATENTSCHRIFT

(11) **EP 3 273 828 B1**
(45) Veröffentlichungstag und Bekanntmachung des Hinweises auf die Patenterteilung: **30.09.2020**
(21) Anmeldenummer: 16709458.0
(22) Anmeldetag: 11.03.2016
(51) Int. Cl.: A47J 31/44

(54) **VERFAHREN UND DAMPFLANZE ZUM ERZEUGEN INSBESONDERE VON MILCHSCHAUM**
METHOD AND STEAM LANCE FOR GENERATING, IN PARTICULAR, MILK FROTH
PROCÉDÉ ET LANCE À VAPEUR SERVANT À PRODUIRE EN PARTICULIER DE LA MOUSSE DE LAIT

(30) Priorität: 26.03.2015 CH 4392015
(43) Veröffentlichungstag der Anmeldung: 31.01.2018
(73) Patentinhaber: Steiner AG Weggis, 6353 Weggis (CH)
(72) Erfinder: STEINER, Adrian, 6353 Weggis (CH)
(74) Vertreter: Luchs, Willi
(86) Internationale Anmeldenummer: PCT/EP2016/055334
(87) Internationale Veröffentlichungsnummer: WO 2016/150731

(56) Entgegenhaltungen:
- EP-A1- 2 606 783
- WO-A1-2011/151871
- DE-U1- 29 502 594
- FR-A1- 2 604 077

## Beschreibung

Die Erfindung betrifft ein Verfahren und eine Einrichtung zum Erzeugen von Milchschaum, insbesondere für die Zubereitung milchschaumhaltiger Getränke in einer Kaffeemaschine oder einer ähnlichen Einrichtung, wobei der Milch die Medien Wasserdampf und Druckluft über eine in die Milch eintauchende Dampflanze zugeführt wird.

Eine Einrichtung dieser Art ist in der EP-A-1 501 398 geoffenbart. Sie besteht im Wesentlichen aus einem Dampferzeuger und einer Druckluftquelle, sowie aus einer Dampfzufuhrleitung und einer mit dieser verbundenen Druckluftzufuhrleitung, welche durch die in die Milch eintauchende Dampflanze fortgesetzt wird. Die Vermischung der beiden Medien Dampf und Luft erfolgt somit bereits vor der Dampflanze. Es ist infolgedessen schwierig, die Qualität des Milchschaums anzupassen und je nach Art des zuzubereitenden Getränkes zu verändern. Dabei müssen Einrichtungen heutzutage dieser Art hinsichtlich der Produktqualität hohen Anforderungen genügen, obwohl ihre Einsatz- und Betriebsbedingungen oft von Fall zu Fall erheblich variieren.

Eine Vorrichtung zum Erwärmen und Emulgieren einer Flüssigkeit gemäss der Druckschrift EP-A-2 606 783 ist mit einem länglichen Körper als Lanze vorgesehen. Dieser Körper weist einen Anschlusskopf für eine Dampfquelle und einen innenliegenden Kanal für die Dampfzufuhr auf, der den Anschlusskopf mit einer Luft-/Dampf-Mischdüse mit Venturi-Effekt verbindet. Eine Luftansaugleitung ist an einem Ende an eine Ansaugöffnung angeschlossen und am unteren Ende zu einer Lufteinlassöffnung der Mischdüse geführt. Durch die eine Leitung, welche durch den innenliegenden Kanal gebildet ist, erfolgt eine Dampfzufuhr und durch die äussere Luftansaugleitung wird nur Luft zugeführt. Etwas anderes ist nicht offenbart, denn die Ansaugöffnung für die Luft ist nicht mit dem Dampfanschluss verbunden.

Gemäss der Druckschrift FR-A-2 604 077 ist eine Vorrichtung zur Herstellung von Cappuccino mit einer Dampfdüse offenbart. An der Düse des Dampfrohrs erfolgt bei einer parallelen Leitung eine Luftversorgung. Bei einer unteren Öffnung beim Ausgang bei der Vorrichtung wird der erhitzte Dampf und Luft zusammen in die Milch geführt.

Bei einer Kaffeemaschine gemäss der Druckschrift WO-A-2011/151871 ist in einem Heizcontainer mit einem Tank für die Milchaufnahme offenbart, in welchen ein Dampf- und ein Luftauslass durch jeweils ein Rohr geführt ist. Diese beiden Auslässe sind nahe beieinander angeordnet, um Schaum zu erzeugen.

Der Erfindung liegt demgegenüber die Aufgabe zugrunde, diese Nachteile zu vermeiden und ein Verfahren und eine Dampflanze der eingangs genannten Art zu schaffen, die automatisch eine stets optimale Milchschaumqualität bei leichter Bedienung der Einrichtung gewährleisten.

Diese Aufgabe wird erfindungsgemäss nach den Merkmalen des Anspruchs 1 bzw. des Anspruchs 6 gelöst.

Für das Aufschäumen der Milch ist das Eiweiss in der Milch hauptsächlich verantwortlich. Das schnelle Einspritzen des Dampfes in die Milch zerschlägt die Eiweissmoleküle und macht die Milch sämig, wobei je schneller das Einspritzen von Dampf erfolgt, desto feiner sind die sich bildenden Luftbläschen. Die Erfindung macht sich diese Erkenntnisse zunutze, indem Dampf mit der für die Zerschlagung der Eiweissmoleküle erforderlichen Dampfgeschwindigkeit eingespritzt wird und gleichzeitig ein Dampf-Luftgemisch mit dem für die Luftblasenbildung nötigen Luftanteil zugeführt wird. Da beide Medien erst in der Milch miteinander vermischt werden, ist ihr direktes Zusammenwirken im Produkt sichergestellt.

Um dieses Zusammenwirken zu optimieren, sieht die Erfindung vor, dass die aus der Dampflanze austretenden Medien unmittelbar nach Verlassen der Dampflanze aufeinanderprallen, wobei durch den Aufpralleffekt eine optimierte Vermengung der Luftblasen mit den Eiweissmolekülen der aufzuschäumenden Milch bewirkt wird.

Das erfindungsgemässe Verfahren eignet sich besonders für die von Hand durchgeführte aber annähernd automatisch gesteuerte Erzeugung des Milchschaums. Hierfür ist es gemäss der Erfindung vorgesehen, dass die Dampf- und die Dampf-Luftzufuhr zeit- und temperaturabhängig gesteuert werden, wobei in einer ersten Phase sowohl die Dampf- als auch die Dampf-Luftzufuhrleitung aktiv sind, während in einer zweiten Phase der Milch nur Dampf durch die Dampfzufuhrleitung zugeführt wird.

Es ist dabei besonders vorteilhaft, wenn die Dampf-Luftzufuhrleitung in der ersten Phase zyklisch aktiviert wird, wobei in jedem Zyklus das Verhältnis zwischen der aktiven und der inaktiven Periode vorzugsweise drei zu eins beträgt. Der zyklische Wechsel verbessert die Verwirbelung der Milch, sodass die Luftblasen auf der Milchoberfläche zerstört werden und so ein feinporiger homogener Milchschaum erzielt wird, wobei das Verhältnis zwischen der aktiven und der inaktiven Periode für die Schaumqualität entscheidend ist.

Die Erfindung sieht hierbei vor, dass die Gesamtdauer der ersten Phase vom Volumen der zu verarbeitenden Milch abhängig ist.

Die erfindungsgemässe Dampflanze zum Durchführen des Verfahrens zeichnet sich dadurch aus, dass bei ihr sich die Dampflanze aus wenigstens zwei Leitungen und einem Endstück mit Austrittsöffnungen für die durch die Dampflanze geführten Medien zusammensetzt, wobei durch die eine Leitung vorzugsweise nur Dampf und durch die andere Leitung ein Dampf-Luftgemisch zuführbar ist, und die Austrittsöffnungen derart ausgebildet sind, dass die daraus austretenden Medien unmittelbar nach Verlassen der Dampflanze aufeinanderprallen.

Dadurch ist sichergestellt, dass die beiden durch die Dampflanze geführten Medien unmittelbar nach Verlassen der Dampflanze gegeneinander aufeinanderprallen können. Es ist hierbei zweckmässig, wenn die Austrittsöffnung der beiden Leitungen vorzugsweise um ca. 70° bzw. um ca. 15° zur Waagerechten geneigt sind.

Die Dampflanze ist mit einem sehr kompakten Aufbau vorgesehen, der robust ist und eine hohe Betriebssicherheit gewährleistet. Trotz ihrer Kompaktheit kann sie dennoch auch mit einem zentrisch in der Innenleitung angeordneten Milch- bzw. Milchschaumtemperaturfühler für die temperaturabhängige Steuerung der Milchschaumerzeugungseinrichtung versehen werden.

Zweckmässigerweise eignet sich die Dampflanze sowohl als Bestandteil einer selbständig arbeitenden Milchschaumerzeugungseinheit als auch als integraler Bestandteil einer automatischen Kaffeemaschine zum Zubereiten milchschaumhaltiger Getränke.

Die Erfindung ist nachfolgend anhand eines Ausführungsbeispiels unter Bezugnahme auf die Zeichnung näher erläutert. Es zeigt:
- Fig. 1: eine schematisch dargestellte nach dem erfindungsgemässen Verfahren arbeitende Milchschaumerzeugungseinrichtung;
- Fig. 2: ein Steuerungsdiagramm der Einrichtung nach Fig. 1;
- Fig. 3: ein Schema des Aufbauprozesses der Milchschaumentstehung;
- Fig 4a,: b eine erfindungsgemässe Dampflanze, in zwei Seitenansichten dargestellt,
- Fig. 5: einen Teilschnitt des vorderen Bereichs der Dampflanze nach Fig. 4a; und
- Fig. 6: eine Ansicht von unten auf die Dampflanze nach Fig. 5.

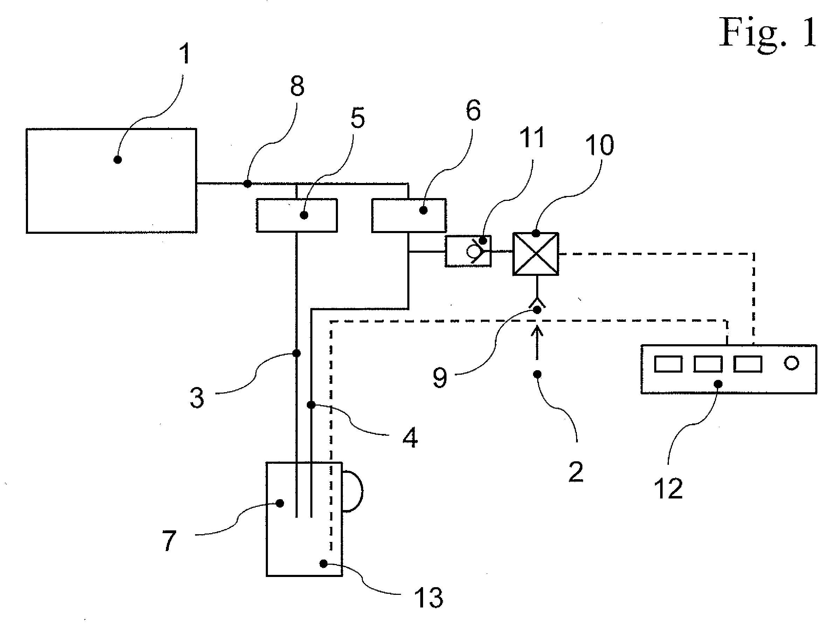

Die Milchschaumerzeugungseinrichtung nach Fig. 1 besteht aus einem Boiler 1, einer Druckluftquelle 2, zwei voneinander getrennten Zufuhrleitung 3, 4 mit Steuerungsventilen 5 bzw. 6 und einer nicht dargestellten Dampflanze, welche die Austrittsenden der Zufuhrleitungen 3, 4 bildet und in ein Milch enthaltendes Gefäss 7, insbesondere in einen Milchkrug, eintauchbar ist.

Im Boiler 1 wird Wasserdampf mit einem Betriebsdruck von ca. 1,9 bar aufbereitet, der über eine Leitung 8 den beiden Zufuhrleitungen 3, 4 zugeführt wird. Die Zuführleitung 4 ist zusätzlich an die Druckluftquelle 2 über einen Luftdruckregler 9, einen Kompressor 10 und ein Rückschlagventil 11 angeschlossen.

Die Steuerung der Einrichtung erfolgt durch eine Kontrolleinheit 12, die steuerungstechnisch sowohl mit den Steuerventilen 5, 6 als auch mit dem Kompressor 10 sowie einem im Milchgefäss 7 eingetauchten Temperaturfühler 13 verbunden ist.

Durch die Zufuhrleitung 3, nachfolgend bezeichnet als Dampfleitung, wird ausschliesslich Dampf zugeführt, dessen Dampfgeschwindigkeit hoch genug ist, um die Eiweissmoleküle der aufzuschäumenden Milch ausreichend zu zerschlagen.

Die nachfolgend als Dampf-Luftleitung bezeichnete Zufuhrleitung 4 dient ihrerseits dazu, der Milch für die Blasenbildung nötigen Anteil Luft beizumischen, wobei hier der Dampf als Träger dient, um die Luft in die Milch besser zu leiten.

Der Kompressor 10 hat wiederum die Aufgabe, einen konstanten Luftdruck zu erzeugen, um dem Dampf die Luft beizumischen. Die Luftmenge kann über einen Luftregler 2 verändert werden. Dadurch kann die Porigkeit des Milchschaums eingestellt werden.

Der Temperaturfühler 13 misst die aktuelle Temperatur der Milch bzw. des Milchschaums und leitet diese Information zur Kontrolleinheit 12 weiter, der die Steuerung des gesamten Prozesses zeit- und temperaturabhängig übernimmt.

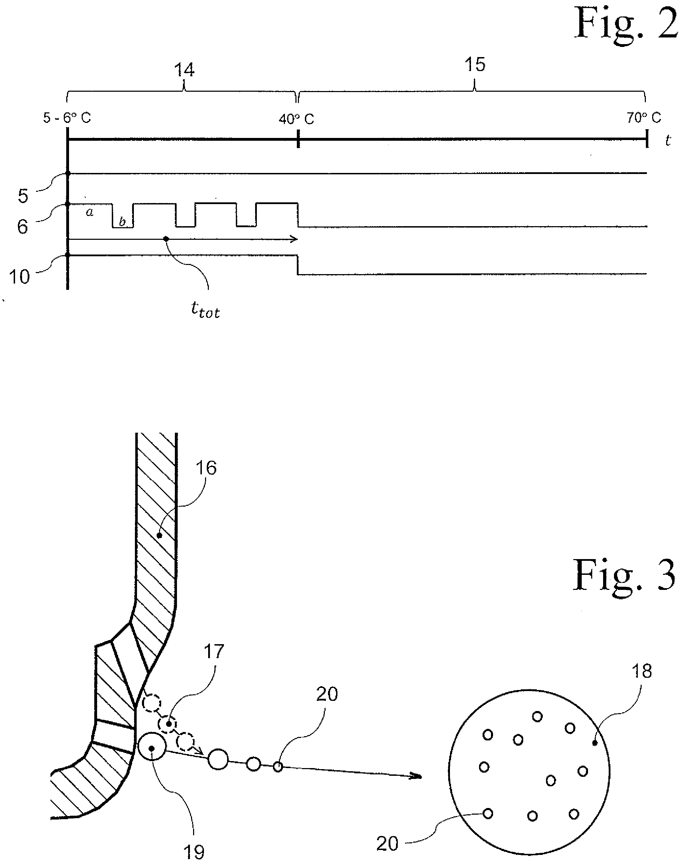

Wie aus Fig. 2 ersichtlich ist, erfolgt dies durch Ein- und Ausschalten der Ventile 5, 6, wobei in einer ersten Phase 14 beide Ventile sowie der Kompressor 10 eingeschaltet und somit sowohl die Dampfleitung 3 als auch die Dampf-Luftleitung 4 aktiv sind, während in einer zweiten Phase 15 das Ventil 6 und der Kompressor 10 ausgeschaltet sind, so dass dann nur die Dampfleitung 3 aktiv ist und der Milch nur Dampf zugeführt wird.

Um die Verwirbelung der Milch zu verbessern, wird die in der ersten Phase 14 aktive Dampf-Luftleitung 4 zyklisch aktiviert, wobei in jedem Zyklus das Verhältnis von a zu b zwischen der aktiven und der inaktiven Periode vorzugsweise 3 zu 1 beträgt. Aus der Anzahl Zyklen pro Phase ergibt sich die Gesamtdauer dieser Phase, die vom Volumen der zu verarbeitenden Milch abhängig ist. Am Anfang der ersten Phase wird von einer Milchtemperatur im Kühlbereich von 5 bis 6° C ausgegangen. Diese ist am Ende dieser Phase auf ca. 40° C angestiegen und beträgt max. 70° C am Ende der zweiten Phase. Diese Endtemperatur des Milchschaums darf nicht überschritten werden, weil oberhalb dieses Wertes das Eiweiss der Milch zu gerinnen beginnt und sich dadurch der Milchschaum auflöst. Im Prinzip könnten auch mehr als zwei Phasen vorgesehen sein.

Die erfindungsgemässe Milchschaumentstehung ist in Fig. 3 schematisch verdeutlicht. Um die Milchschaumbildung zu begünstigen, wird der aus der Dampflanze 16 austretende Dampf 17 mit hoher Geschwindigkeit in die Milch eingespritzt, um die Eiweissmoleküle 18 der Milch zu zerschlagen und die Milch sämig zu erzeugen. Dabei gilt, dass je schneller der Dampf eingespritzt wird, desto feiner werden die aus dem Dampf-Luftgemisch 19 entstehenden Luftbläschen 20 im Milchschaum zerteilt.

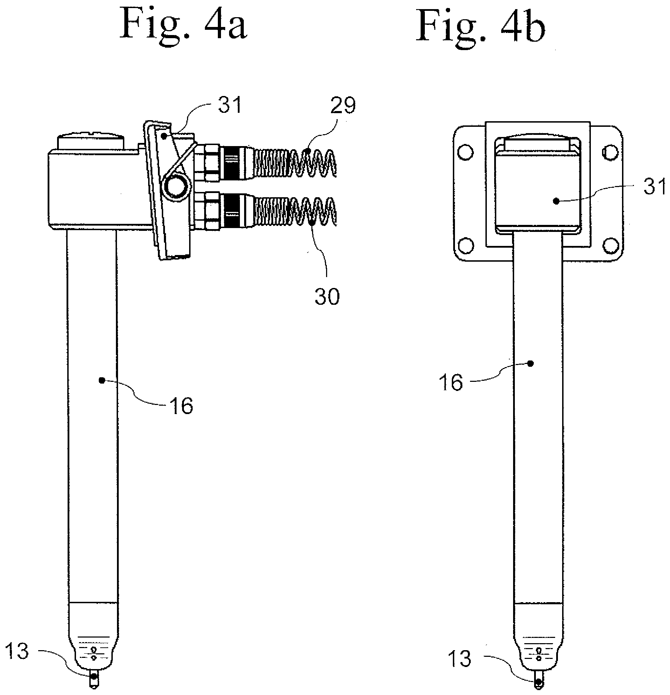

Die erfindungsgemässe Dampflanze 16 gemäss Fig. 4a bis Fig. 6 setzt sie sich aus zwei koaxial zueinander angeordneten Leitungen 21, 22 und einem sie im Austrittsbereich gasdicht voneinander trennenden Endstück 23 mit Austrittsöffnungen 24, 25 für die durch Dampflanze geführten Medien Dampf und Luft zusammen, wobei durch die äussere Leitung 21 nur Dampf und durch die innere Leitung 22 das Dampf-Luftgemisch geführt wird.

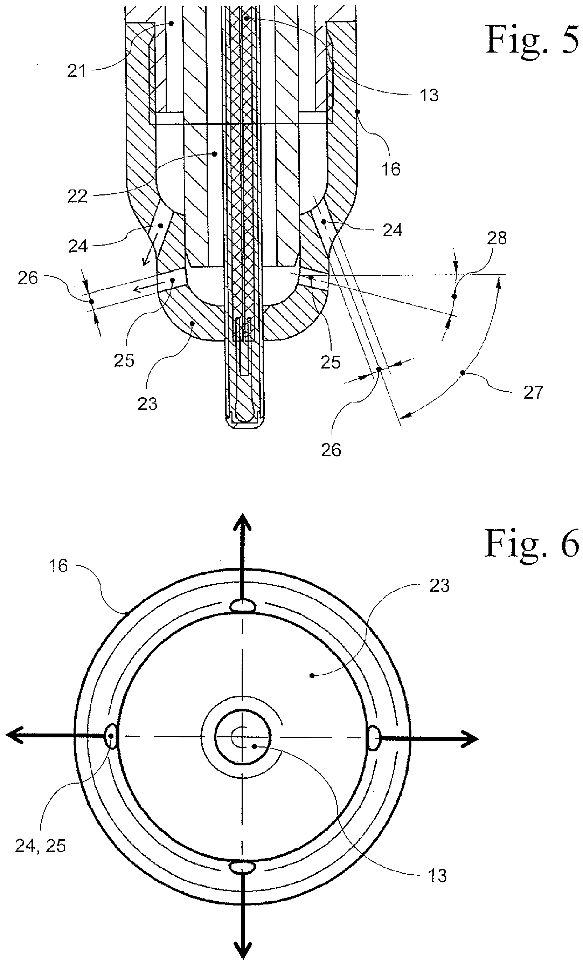

Wie auch aus Fig. 5 und Fig. 6 ersichtlich ist, sind die Austrittsöffnungen 24, 25 paarweise annähernd in einer durch die Längsachse der Dampflanze verlaufenden Ebene angeordnet. Dabei sind sie als kranzförmig angeordnete Düsen 26 von ca. 1,5 mm 0 ausgebildet, die sowohl zur Waagrechten als auch relativ zueinander geneigt sind. Die Neigungswinkel 27, 28 betragen beim beschriebenen Ausführungsbeispiel 70° bzw. 15°, um sicherzustellen, dass die beiden Medien Dampf und Dampf-Luftgemisch unmittelbar nach ihrem Austritt aus der Dampflanze 16 aufeinanderprallen können. Der Aufpralleffekt am Schnittpunkt bewirkt einem optimierte Vermengung der Luftblasen 20 mit den Eiweissmolekülen 18 der Milch und trägt somit entscheidend dazu bei, die Qualität des erzeugten Milchschaumes zu optimieren.

Die Dampflanzenkonstruktion ermöglicht es auch, den Temperaturfühler 13 der Steuerungseinrichtung zentrisch in der Innenleitung 22 der Dampflanze anzuordnen, wobei der stirnseitig aus dem Endstück 23 herausragt.

Wie aus Fig. 4a bzw. Fig. 4b ersichtlich, ist die Dampflanze 16 an Schlauchleitungen 29, 30 der Milchschaumerzeugungseinrichtung anschliessbar, die es ermöglichen, die Dampflanze innerhalb eines bestimmten Bereiches weg von der Einrichtung zu bewegen und sie damit unabhängig von einem festen Standort des Milchgefässes einzusetzen. Eine Halterung 31 dient zum Befestigen der Dampflanze am Milchgefäss oder an das Aussengehäuse der Einrichtung.

Die Dampflanze 16 ist Bestandteil einer Milchschaumerzeugungseinrichtung, die autonom, d.h. unabhängig von einer automatischen Kaffeemaschine oder einer ähnlichen Milchschaumgetränke erzeugenden Maschine arbeiten kann. Es ist aber ohne Weiteres möglich, die Dampflanze 16 in einer solchen Maschine zu integrieren, die dann die Bereitstellung der beiden Medien Dampf und Dampf-Luftgemisch für die Milchschaumerzeugung übernimmt. Im Prinzip könnten auch zwei Dampf-Luftgemische vorgesehen sein.

Die Dampflanze könnte theoretisch mit mehr als zwei Rohrleitungen ausgebildet sein, beispielsweise um eine unterschiedliche Dampf/Luftmenge einzublasen.

## Patentansprüche

1. Verfahren zum Erzeugen von Milchschaum, insbesondere für die Zubereitung milchschaumhaltiger Getränke in einer Kaffeemaschine oder einer ähnlichen Einrichtung, wobei der Milch die Medien Wasserdampf und Druckluft über eine in die Milch eintauchende Dampflanze (16) zugeführt wird, wobei die beiden Medien Dampf und Luft der Milch durch wenigstens zwei bis zum Austritt aus der Lanze voneinander getrennte Zufuhrleitungen (3, 4 bzw. 21, 22) zugeführt werden, **dadurch gekennzeichnet, dass**
durch die eine Leitung (3 bzw. 21) vorzugsweise nur Dampf mit der erforderlichen Dampfgeschwindigkeit zugeführt wird, während durch die andere Leitung (4 bzw. 22) ein Dampf-Luftgemisch zum Anreichern der Milch mit dem nötigen Luftanteil zugeführt wird, welches mit dem Dampf aus der anderen Leitung (3 bzw. 21) erst in der aufzuschäumenden Milch vermischt wird.

2. Verfahren nach Anspruch 1, **dadurch gekennzeichnet, dass**
die aus der Dampflanze (16) austretenden Medien unmittelbar nach Verlassen der Dampflanze aufeinanderprallen und durch den Aufpralleffekt eine optimierte Vermengung der Luftblasen mit den Eiweissmolekülen der aufzuschäumenden Milch bewirkt wird.

3. Verfahren nach Anspruch 1 oder 2, **dadurch gekennzeichnet, dass** die Dampf- und die Dampf-Luftzufuhr zeit- und temperaturabhängig gesteuert werden, wobei in einer ersten Phase sowohl die Dampf- als auch die Dampf-Luftzufuhrleitung (3 bzw. 4) aktiv sind, während in einer zweiten Phase die Dampf-Luftzufuhrleitung (4) inaktiv ist und der Milch nur Dampf durch die Dampfzufuhrleitung (3) zugeführt wird.

4. Verfahren nach Anspruch 3, **dadurch gekennzeichnet, dass**
die Dampf-Luftzufuhrleitung (4) in der ersten Phase zyklisch aktiviert wird, wobei in jedem Zyklus das Verhältnis zwischen der aktiven und der inaktiven Periode vorzugsweise drei zu eins beträgt.

5. Verfahren nach Anspruch 3 oder 4, **dadurch gekennzeichnet, dass** die Gesamtdauer der ersten Phase vom Volumen der zu verarbeitenden Milch abhängig ist.

6. Dampflanze, vorzugsweise zum Durchführen des Verfahrens nach einem der vorhergehenden Ansprüche 1 bis 5, wobei sich die Dampflanze (16) aus wenigstens zwei Leitungen (21,22) und einem Endstück (23) mit Austrittsöffnungen (24, 25) für die durch die Dampflanze geführten Medien zusammensetzt, wobei durch die eine Leitung vorzugsweise nur Dampf und durch die andere Leitung ein Dampf-Luftgemisch zuführbar ist, und die Austrittsöffnungen (24, 25) derart ausgebildet sind, dass die daraus austretenden Medien unmittelbar nach Verlassen der Dampflanze aufeinanderprallen, **gekennzeichnet dadurch, dass** die Austrittsöffnungen (24, 25) um einen Neigungswinkel (27) von ca. 70° bzw. um einen Neigungswinkel (28) von ca. 15° zur Waagrechten geneigt sind.

7. Dampflanze nach Anspruch 6, **dadurch gekennzeichnet, dass**
die Austrittsöffnungen (24, 25) paarweise annähernd in einer durch die Längsachse der Dampflanze verlaufenden Ebene angeordnet sind.

8. Dampflanze nach Anspruch 6 oder 7, **dadurch gekennzeichnet, dass**
sich die Dampflanze (16) aus zwei koaxial zueinander angeordneten Leitungen (21,22) und einem sie im Austrittsbereich voneinander trennenden Endstück (23) mit den Austrittsöffnungen (24, 25) für die durch die Dampflanze geführten Medien zusammensetzt, wobei die Austrittsöffnungen (24, 25) kranzförmig um die Dampflanze herum ausgebildet sind.

9. Dampflanze nach einem der vorhergehenden Ansprüche 6 bis 8, **dadurch gekennzeichnet, dass**
die Dampflanze (16) mit einem zentrisch in der inneren Leitung (21) angeordneten und stirnseitig aus dem Endstück (23) der Dampflanze ragenden Temperaturfühler (13) versehen ist.

10. Dampflanze nach einem der vorhergehenden Ansprüche 6 bis 9, **dadurch gekennzeichnet, dass**
die Dampflanze (16) mit Anschlussschläuchen (29, 30) für den Dampf und das Dampf-Luftgemisch sowie einer Halterung (31) zum Aufhängen der Dampflanze an einem Gehäuse oder einem Milchgefäss versehen ist.

11. Dampflanze nach einem der vorhergehenden Ansprüche 6 bis 10, **dadurch gekennzeichnet, dass**
die Dampflanze (16) von Hand oder selbsttätig an eine Dampflanzenreinigungseinheit anschliessbar ist.

12. Dampflanze nach einem der vorhergehenden Ansprüche 6 bis 11, **dadurch gekennzeichnet, dass**
sie als Bestandteil einer selbständig arbeitenden Milchschaumerzeugungseinheit oder einer Kaffeemaschine vorgesehen ist.

## Claims

1. A method for generating milk froth, in particular for the preparation of drinks that contain milk froth in a coffee machine or a similar device, whereby the media of water vapour and compressed air being supplied to the milk via a steam lance (16) immersed in the milk, whereby the two media of steam and air are supplied to the milk by at least two supply lines (3, 4 or 21, 22) which are separated from one another up to the outlet from the lance, **characterised in that**
by the one line (3 or 21) preferably only steam with the required vapour velocity being supplied, whereas a steam/air mixture for enriching the milk with the necessary air proportion is supplied by the other pipeline (4 or 22), which steam/air mixture is only mixed with the steam from the other pipeline (3 or 21) in the milk that is to be frothed.

2. The method according to Claim 1, **characterised in that** the media passing out of the steam lance (16) collide immediately after leaving the steam lance, and the colliding effect brings about optimised mixing of the air bubbles with the protein molecules of the milk that is to be frothed.

3. The method according to Claim 1 or 2, **characterised in that** the supply of steam and steam and air is controlled time- and temperature-dependently, whereby in a first phase both the steam and the steam/air supply line (3 or 4) being active, whereas in a second phase the steam/air supply line (4) is inactive and only steam is supplied to the milk by means of the steam supply line (3).

4. The method according to Claim 3, **characterised in that** the steam/air supply line (4) is activated cyclically in the first phase, whereby in each cycle the ratio between the active and the inactive period preferably being three to one.

5. The method according to Claim 3 or 4, **characterised in that** the total duration of the first phase is dependent upon the volume of the milk to be processed.

6. A steam lance, preferably for implementing the method according to any of the preceding Claims 1 to 5, whereby the steam lance (16) is composed of at least two pipelines (21, 22) and an end piece (23) with outlet openings (24, 25) for the media conveyed through the steam lance, whereby preferably only steam being able to be supplied by the one pipeline, and a steam/air mixture by the other pipeline, and the outlet openings (24, 25) being designed such that the media passing out of them collide immediately after leaving the steam lance, **characterised in that**
the outlet openings (24, 25) are preferably inclined by an angle of inclination (27) of approx. 70° or by an angle of inclination (28) of approx. 15° to the horizontal.

7. The steam lance according to Claim 6, **characterised in that** the outlet openings (24, 25) are arranged in pairs approximately in a plane running through the longitudinal axis of the steam lance.

8. The steam lance according to Claim 6 or 7, **characterised in that** the steam lance (16) is composed of two pipelines (21, 22) arranged coaxially with one another and an end piece (23) separating them from one another in the outlet region and with the outlet openings (24, 25) for the media conveyed through the steam lance, whereby the outlet openings (24, 25) being formed annularly around the steam lance.

9. The steam lance according to any of the preceding Claims 6 to 8, **characterised in that**
the steam lance (16) is provided with a temperature sensor (13) located centrally in the inner pipeline (21) and projecting out of the end piece (23) of the steam lance on the face side.

10. The steam lance according to any of the preceding Claims 6 to 9, **characterised in that**
the steam lance (16) is provided with connection hoses (29, 30) for the steam and the steam/air mixture and with a holder (31) for hanging the steam lance up on a housing or a milk vessel.

11. The steam lance according to any of the preceding Claims 6 to 10, **characterised in that**
the steam lance (16) can be connected manually or automatically to a steam lance cleaning unit.

12. The steam lance according to any of the preceding Claims 6 to 11, **characterised in that**
it is provided as a component of an independently working milk froth generating unit or of a coffee machine.

## Revendications

1. Procédé de production de mousse de lait, notamment pour la préparation de boissons contenant de la mousse de lait dans une machine à café ou un dispositif semblable, dans lequel on apporte au lait les fluides vapeur d'eau et air comprimé par une lance (16) à vapeur plongeant dans le lait, les deux fluides vapeur et air étant apportés au lait par au moins deux conduits (3, 4 ou 21, 22) d'apport séparés l'un de l'autre jusqu'à la sortie de la lance, **caractérisé en ce que** l'on apporte, par l'un des conduits (3 ou 21), de préférence seulement de la vapeur à la vitesse de la vapeur nécessaire, tandis que, par l'autre conduit (4 ou 22), on apporte un mélange de vapeur et d'air pour enrichir le lait en la proportion d'air nécessaire, mélange que l'on mélange à la vapeur provenant de l'autre conduit (3 ou 21) seulement dans le lait à faire mousser.

2. Procédé suivant la revendication 1, **caractérisé en ce que** l'on fait rebondir l'un sur l'autre les fluides sortant de la lance (16) à vapeur immédiatement après avoir quitté la lance à vapeur et, par l'effet de rebondissement, on provoque un mélange optimisé des bulles d'air aux molécules d'albumine du lait à faire mousser.

3. Procédé suivant la revendication 1 ou 2, **caractérisé en ce que**
l'on règle l'apport de vapeur et/ou de vapeur-air en fonction du temps et de la température, dans lequel, dans une première phase, à la fois le conduit (3) d'apport de vapeur et le conduit (4) d'apport de vapeur-air sont actifs, tandis que dans une deuxième phase, le conduit (4) d'apport de vapeur-air est inactif et on n'apporte au lait que de la vapeur par le conduit (3) d'apport de vapeur.

4. Procédé suivant la revendication 3, **caractérisé en ce que** l'on active cycliquement le conduit (4) d'apport de vapeur-air dans la première phase, le rapport entre les périodes actives et les périodes inactives étant, dans chaque cycle, de préférence de trois à un.

5. Procédé suivant la revendication 3 ou 4, **caractérisé en ce que**
la durée d'ensemble de la première phase dépend du volume du lait à traiter.

6. Lance à vapeur, de préférence pour effectuer le procédé suivant l'une des revendications 1 à 5 précédentes, dans laquelle la lance (16) à vapeur se compose d'au moins deux conduits (21, 22) et d'un embout (23) ayant des ouvertures (24, 25) de sortie des fluides passant dans la lance à vapeur, dans laquelle, de préférence seulement de la vapeur peut être apportée par un conduit et, par l'autre conduit, un mélange de vapeur et d'air et les ouvertures (24, 25) de sortie sont constituées, de manière à ce que les fluides qui en sortent rebondissent l'un sur l'autre immédiatement après avoir quitté la lance à vapeur, **caractérisée en ce que** les ouvertures (24, 25) de sortie sont inclinées d'un angle (27) d'inclinaison d'environ 70° ou d'un angle (28) d'inclinaison d'environ 15° par rapport à l'horizontal.

7. Lance à vapeur suivant la revendication 6, **caractérisée en ce que**
les ouvertures (24, 25) de sortie sont disposées par paire à peu près dans un plan passant par l'axe longitudinal de la lance à vapeur.

8. Lance à vapeur suivant la revendication 6 ou 7, **caractérisée en ce que** la lance (16) à vapeur se compose de deux conduits (21, 22), disposés coaxialement l'un par rapport à l'autre, et d'un embout (23) les séparant dans la région de sortie et ayant les ouvertures (24, 25) de sortie des fluides passant dans la lance à vapeur, les ouvertures (24, 25) de sortie étant constituées sous la forme d'une couronne tout autour de la lance à vapeur.

9. Lance à vapeur suivant l'une des revendications 6 à 8 précédentes, **caractérisée en ce que**
la lance (16) à vapeur est pourvue d'une sonde (13) de température, disposée de manière centrée dans le conduit (21) intérieur et sortant du côté frontal de l'embout (23) de la lance à vapeur.

10. Lance à vapeur suivant l'une des revendications 6 à 9 précédentes, **caractérisée en ce que**
la lance (16) à vapeur est pourvue de conduits (29, 30) souples de raccordement pour la vapeur et le mélange de vapeur et d'air, ainsi que d'une fixation (31) pour suspendre la lance à vapeur à un boîtier ou à un récipient à lait.

11. Lance à vapeur suivant l'une des revendications 6 à 10 précédentes, **caractérisée en ce que**
la lance (16) à vapeur peut être raccordée à la main ou automatiquement à une unité de nettoyage de la lance à vapeur.

12. Lance à vapeur suivant l'une des revendications 6 à 11 précédentes, **caractérisée en ce qu'**
elle est prévue comme constituant d'une unité de protection de mousse de lait fonctionnant de manière autonome ou d'une machine à café.
